# EUROPÄISCHE PATENTSCHRIFT

(11) **EP 0 918 116 B1**
(45) Veröffentlichungstag und Bekanntmachung des Hinweises auf die Patenterteilung: **02.05.2003**
(21) Anmeldenummer: 98119442.6
(22) Anmeldetag: 15.10.1998
(51) Int. Cl.: E04B 2/76, E04B 1/58, F16B 12/50

(54) **Befestigungswinkel**
Fixing bracket
Equerre de fixation

(30) Priorität: 19.11.1997 DE 29720486 U
(43) Veröffentlichungstag der Anmeldung: 26.05.1999
(73) Patentinhaber: ROBERT BOSCH GMBH, 70442 Stuttgart (DE)
(72) Erfinder: Benz, Albrecht, 70771 Leinfelden-Echterdingen (DE); Walther, Joerg, 70825 Korntal (DE); Koban, Johannes, 70178 Stuttgart (DE); Klemd, Olaf, 71706 Markgroeningen (DE); Breitenbücher, Armin, 73655 Pluederhausen (DE)

(56) Entgegenhaltungen:
- WO-A-88/08940
- DE-A- 3 738 128
- DE-U- 29 704 977
- FR-A- 983 554
- US-A- 4 685 839
- BOSCH: "MECHANIK GRUNDELEMENTE" FLEXIBLE AUTOMATION,1996 - 1997, Seiten 3.1-3.25, XP002094146

## Beschreibung

### Stand der Technik

Die Erfindung geht von einem Befestigungswinkel entsprechend der Gattung des Oberbegriffs des Anspruchs 1 aus. Derartige Befestigungswinkel sind in einer Vielzahl von Ausbildungsvarianten, beispielsweise aus dem Verkaufskatalog "Bosch, Flexible Automation, Mechanik Grundelemente, Jahrgang 1996/97, Seite 3-1 bis 3-25" bereits bekannt.

Zur Ausbildung von Trenn- oder Schutzwänden, die beispielsweise einen Gefahrenbereich vor unbefugtem Zutritt beziehungsweise Zugriff schützen sollen, sind die bekannten Befestigungswinkel an Stützprofilen angebracht, um Rahmenkonstruktionen beispielsweise in Form von Schutzgittern oder Schutzscheiben an diesen Stützprofilen zu befestigen. Bekannte Befestigungswinkel haben diesbezüglich den Nachteil einer relativ geringen Stabilität. Kerbwirkungen an der Übergangsstelle der beiden Schenkel eines Befestigungswinkels erlauben lediglich die Anbringung relativ leichter Rahmenkonstruktionen.

### Vorteile der Erfindung

Demgegenüber weist ein Befestigungswinkel mit den kennzeichnenden Merkmalen des Anspruchs 1 den Vorteil einer besonders hohen Stabilität auf, wodurch auch relativ schwere Rahmenkonstruktionen sicher und zuverlässig an Stützprofilen fixierbar sind. Die Stützprofile lassen sich dadurch in großen Abständen zueinander positionieren. Dies spart Material- und Montagekosten für die Trennwände ein.

Weitere Vorteile oder vorteilhafte Weiterbildungen der Erfindung ergeben sich aus den Unteransprüchen und der Beschreibung. So erlaubt ein die Merkmale des Anspruchs 3 aufweisender Befestigungswinkel, daß die Rahmenkonstruktionen in veränderbaren Abständen und in nahezu beliebigen Winkelstellungen mit den Stützprofilen verbindbar sind, ohne daß der Aufbau und damit die Herstellung des Befestigungswinkels oder dessen Montage gegenüber bekannten Ausführungsvarianten erschwert ist. Der Befestigungswinkel ist zudem kompatibel zu bekannten Ausführungsvarianten ausbildbar, so daß ein breiterer Anwendungsbereich abgedeckt ist.

Durch Zentriereinrichtungen, die gemäß Anspruch 4 lediglich am ersten der beiden Schenkel des Befestigungswinkels ausgebildet sind, und die mit Spiel in eine Längsnut der Stützprofile eingreifen, wird erreicht, daß der Befestigungswinkel zentrisch und verdrehsicher anordenbar ist und dabei eine Verschiebbarkeit in Richtung der Längsnut ermöglicht. Außerdem erlaubt es eine derartige Ausbildung, daß beidseitig, d.h. sowohl an der Außen- als auch an der Innenseite des zweiten Schenkels Profilstäbe anordenbar sind. Besonders kostengünstig ist der erfindungsgemäße Befestigungswinkel entsprechend dem Anspruch 9 in einem Druckgußverfahren herstellbar.

### Zeichnung

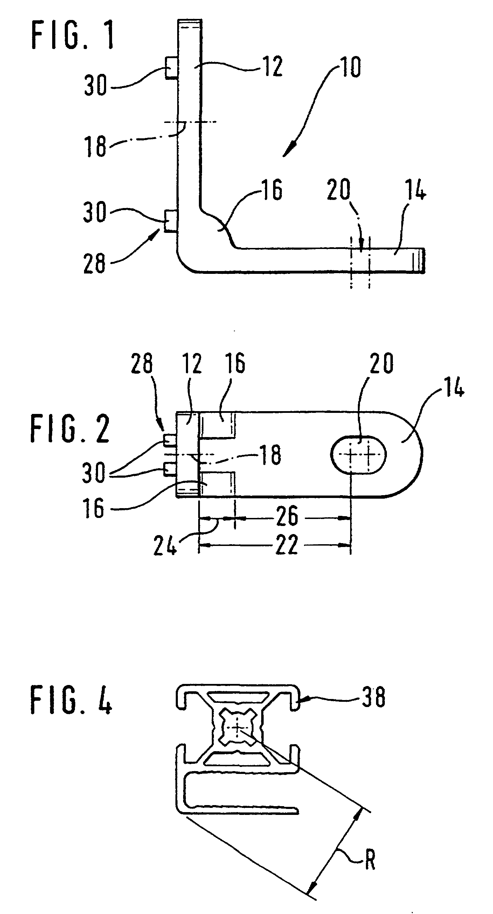

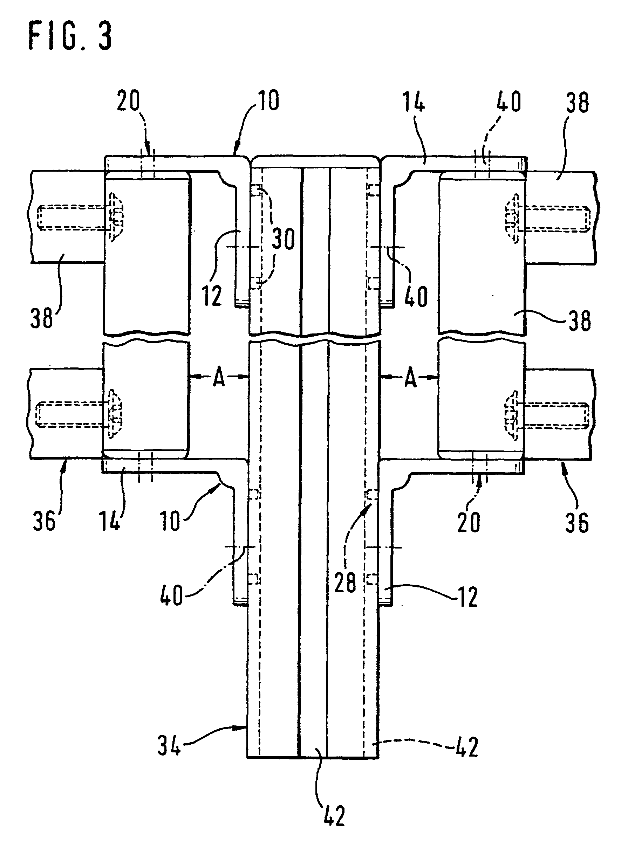

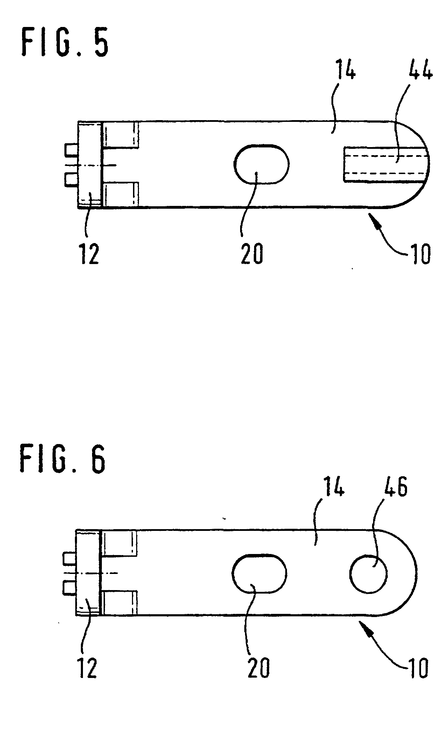

Ein Ausführungsbeispiel der Erfindung ist in der Zeichnung dargestellt und in der nachfolgenden Beschreibung näher erläutert. Figur 1 zeigt eine erste Ausführungsform eines erfindungsgemäßen Befestigungswinkels in einer Seitenansicht, Figur 2 den Befestigungswinkel nach Figur 1 in einer Draufsicht. In Figur 3 ist ein Anwendungsbeispiel für einen derartigen Befestigungswinkel bei einer Trenn- bzw. Schutzwand in einer Seitenansicht dargestellt; Figur 4 zeigt den Profilstab nach Figur 1 in einer beispielhaften Ausbildung im Querschnitt. In den Figuren 5 und 6 sind Weiterbildungen des erfindungsgemäßen Befestigungswinkels nach Figur 1 jeweils in der Draufsicht gezeigt.

### Beschreibung des Ausführungsbeispiels

Der in den Figuren 1 und 2 dargestellte Befestigungswinkel 10 weist einen ersten Schenkel 12 und einen zweiten Schenkel 14 auf. Diese beiden Schenkel 12, 14 sind mit jeweils einem ihrer Enden starr rechtwinklig miteinander verbunden. Die den miteinander verbundenen Enden gegenüberliegenden äußeren Enden der Schenkel 12, 14 sind halbkreisförmig abgerundet. Im Ausführungsbeispiel sind die beiden Schenkel 12, 14 beispielhaft gleich lang ausgebildet.

Die Übergangsstelle vom ersten Schenkel 12 zum zweiten Schenkel 14 ist exemplarisch durch zwei voneinander beabstandete Stützwände 16 verstärkt. Diese beiden Stützwände 16 schließen mit ihren voneinander abgewandten Außenseiten bündig mit den Stirnseiten des Befestigungswinkels 10 ab und haben eine konkav gerundete Außenkontur. Dadurch treten im belasteten Zustand des Befestigungswinkels 10 an den Übergängen von der Stützwand 16 zu den Schenkeln 12, 14 allenfalls unkritische Kerbwirkungen auf.

Des weiteren sind die beiden Schenkel 12, 14 mit Ausnehmungen versehen, die symmetrisch zu den Längsachsen der jeweiligen Schenkel 12, 14 angeordnet sind. Im Falle des ersten Schenkels 12 handelt es sich bei der Ausnehmung um eine Bohrung 18, während die Ausnehmung des zweiten Schenkels 14 als Langloch 20 ausgeführt ist.

Dieses Langloch 20 erstreckt sich in Ausdehnungsrichtung des zweiten Schenkels 14 und weist gegenüber der inneren Wandung des ersten Schenkels 12 einen Abstand 22 auf. Der Abstand 22 ist maßlich aus der Länge zweier Streckenabschnitte 24, 26 zusammengesetzt. Der erste Streckenabschnitt 24 entspricht der Länge der Stützwand 16 in Ausdehnungsrichtung des zweiten Schenkels 14, während der zweite Streckenabschnitt 26 dem Abstand zwischen dem Ende der Stützwand 16 und dem Bohrungsmittelpunkt der dem ersten Schenkel 12 zugewandten Bohrung des Langloches 20 entspricht. Dieser Streckenabschnitt 26 ist so bemessen, daß er länger als der größte Drehradius R (Figur 4) eines am zweiten Schenkel 14 zu montierenden Profilstabs 38 ist. Dieser Profilstab 38 ist dadurch um seine Längsachse in beliebige Winkelstellungen gegenüber dem ersten Schenkel 12 und damit gegenüber einem mit diesem ersten Schenkel 12 verbundenen Profilstab verdrehbar, ohne dabei an den Stützwänden 16 des Befestigungswinkels 10 anzustoßen. Der Profilstab 38 ist in Figur 4 in einer beispielhaften Ausbildung in der Draufsicht und in Figur 3 in einer Seitenansicht dargestellt.

Eine Fixierung des Befestigungswinkels 10 an den Profilstäben erfolgt beispielsweise mittels Schrauben 40 (Figur 3), die die Bohrung 18 bzw. das Langloch 20 durchdringen. Das Langloch 20 des zweiten Schenkels 14 ermöglicht dabei eine Feinjustierung der beiden durch diesen Befestigungswinkel 10 miteinander verbundenen Profilstäbe.

An der Außenseite des ersten Schenkels 12 ist ferner eine Zentriereinrichtung 28 vorgesehen. Diese Zentriereinrichtung 28 wird von insgesamt vier nach außen abstehenden Fortsätzen 30 gebildet. Die Fortsätze 30 bilden die Ecken eines von ihnen aufgespannten Rechtecks und weisen beispielhaft eine quaderförmige Form auf. Da jeweils zwei Fortsätze 30 miteinander fluchten, sind in den Figuren 1 und 2 nur jeweils zwei der vier Fortsätze 30 erkennbar. Die Langseite des von den Fortsätzen 30 aufgespannten Rechtecks verläuft parallel zur Ausdehnungsrichtung des ersten Schenkels 12, die Schmalseite demzufolge senkrecht dazu. Das Maß der Langseite ist derart gewählt, daß durch die Fortsätze 30 eine zuverlässige Längsführung des Befestigungswinkels 10 in einer Nut des nicht dargestellten Profilstabs gewährleistet ist. Die Schmalseite ist so bemessen, daß zwischen der Zentriereinrichtung 28 und dieser Nut ein Spiel verbleibt, so daß der Befestigungswinkel 10 entlang der Nut längsverschiebbar ist.

Ein Anwendungsbeispiel für derartige Befestigungswinkel 10 ist in der Figur 3 dargestellt. Diese zeigt einen Abschnitt einer Trenn- oder Schutzwand, die eine auf dem Boden auf nicht dargestellte Weise verankerbares Stützprofil 34 aufweist. An diesem Stützprofil 34 sind zwei Rahmenkonstruktionen 36 unabhängig voneinander befestigt. Hierzu werden jeweils zwei Befestigungswinkel 10 verwendet, die übereinander an einer der Außenseiten des Stützprofils 34 verankert sind. Die Rahmenkonstruktionen 36 ihrerseits sind mittels Befestigungselementen 40, beispielsweise Schrauben oder Zapfen, mit den Befestigungswinkeln 10 verbunden.

Bei den Rahmenkonstruktionen 36 kann es sich beispielsweise um Gitter oder Scheiben handeln, die von einem aus Profilstäben 38 gebildeten Rahmen umschlossen sind. Diese Rahmenkonstruktionen 36 sind mit ihren parallel zur Längsachse des Stützprofils 34 verlaufenden Profilstäben 38 an den jeweils zweiten Schenkeln 14 der Befestigungswinkel 10 verankert. Das Langloch 20 in den Schenkeln 14 ermöglicht es dabei, den Abstand A zwischen dem Stützprofil 34 und den Profilstäben 38 an die Gegebenheiten des Montagefalls anzupassen. Dabei ermöglicht selbst der minmal einstellbare Abstand A, daß die Profilstäbe 38 gegenüber dem Stützprofil 34 in beliebigen Winkelstellungen verdrehbar sind. Die Rahmenkonstruktionen 36 lassen sich somit nicht nur in 90°- bzw. 180°-Stellung mit dem Stützprofil 34 verbinden.

Figur 3 zeigt des weiteren, daß die Fortsätze 30 der Zentriereinrichtung 28 an den Befestigungswinkeln 10 in Nuten 42 eingreifen, die an den Außenseiten der Stützprofil 34 ausgebildet sind. Damit wird eine längsverschiebbare zentrische Anordnung der Befestigungswinkel 10 an den Stützprofilen 34 erreicht und gleichzeitig eine Verdrehsicherung der Befestigungswinkel 10 ermöglicht.

In Figur 4 ist beispielhaft ein Profilstab 38 in der Draufsicht dargestellt. In diese Ansicht ist der für die Länge des Streckenabschnitts 26 des Befestigungswinkels 10 maßgebende größte Drehradius R dieses Profilstabs 38 eingezeichnet.

Figur 5 zeigt eine weitere Ausbildungsform eines Befestigungswinkels 10, bei dem der zweite Schenkel 14 über das Langloch 20 hinaus verlängert ist und an seiner dem zu montierenden Profilstab 38 zugewandten Auflagefläche ein Formelement 44 aufweist. Dieses Formelement 44 ist im Bereich des vom ersten Schenkel 12 abgewandten Endes des zweiten Schenkels 14 angeordnet und verläuft symmetrisch zu dessen Längsachse. Das Formelement 44 ist als Steg mit beispielsweise einem t-förmigen oder einem schwalbenschwanzförmigen Querschnitt ausgebildet und ist gegenüber dem Langloch 20 beabstandet. Dadurch ragt das Formelement 44 in die Nut 42 eines mit dem Befestigungswinkel 10 gekoppelten, waagerechten Profilstabs 38 einer Rahmenkonstruktion 36 hinein und stellt zwischen dieser Rahmenkonstruktion 36 und dem Stützprofil 34 einen Formschluß her, ohne die Anpassungsmöglichkeit des Abstandes A zwischen dem Stützprofil 34 und den Profilstäben 38 (Figur 3) an die Einsatzbedingungen zu beschränken.

Figur 6 zeigt einen Befestigungswinkel 10, dessen zweiter Schenkel 14 zur Anordnung einer Zusatzbohrung 46 über das Langloch 20 hinaus verlängert ist. Mittels dieser Zusatzbohrung 46 läßt sich, falls erforderlich, zwischen einer mittels eines Zapfens oder einer Stiftschraube in den Langlöchern 20 der unteren Befestigungswinkel 10 lagerbaren Rahmenkonstruktion 36 (Figur 3) und dem Befestigungswinkel 10 ein zusätzlicher Formschluß herstellen.

## Patentansprüche

1. Befestigungswinkel (10) zum Verbinden wenigstens zweier Profilstäbe (34, 38), die jeweils eine Zentralbohrung und an wenigstens einer ihrer Außenseiten eine Längsnut (42) aufweisen, mit einem ersten Schenkel (12) und einem rechtwinklig dazu angeordneten zweiten Schenkel (14), die jeweils mit einer Ausnehmung versehen sind, durch die der Befestigungswinkel (10) mittels Befestigungselementen (40) mit den beiden Profilstäben (34, 38) verankerbar ist, wobei die Ausnehmung des ersten Schenkels (12) eine Bohrung (18) und die Ausnehmung des zweiten Schenkels (14) ein Langloch (20) ist und mit einer an der Außenseite wenigstens einer der Schenkel (12, 14) ausgebildeten Zentriereinrichtung (28), die in die Längsnut (42) des zugeordneten Profilstabs (34, 38) eingreifen kann, **dadurch gekennzeichnet, daß** die beiden Schenkel (12, 14) wenigstens eine in ihrer Außenkontur nach außen abgerundete Stützwand (16) aufweisen, die die einander zugewandten Innenseiten der Schenkel (12, 14) zumindest abschnittsweise miteinander verbindet.

2. Befestigungswinkel nach Anspruch 1, **dadurch gekennzeichnet, daß** zwei zueinander beabstandete Stützwände (16) vorhanden sind, deren voneinander abgewandte Seitenflächen bündig in die Stirnflächen des Befestigungswinkels (10) übergehen.

3. Befestigungswinkel nach einem der Ansprüche 1 oder 2, **dadurch gekennzeichnet, daß** das Langloch (20) des zweiten Schenkels (14) zum ersten Schenkel (12) einen Abstand (22) aufweist, der größer ist als die Summe aus der Länge der sich in Richtung des zweiten Schenkels (14) erstreckenden Stützwand (16) und der Länge des größten Drehradius (R) des mit dem zweiten Schenkel (14) zu verbindenden Profilstabs (38).

4. Befestigungswinkel nach einem der Ansprüche 1 bis 3, **dadurch gekennzeichnet, daß** die wenigstens eine Zentriereinrichtung (28) am ersten Schenkel (12) ausgebildet ist und mit Spiel in die Längsnut (42) des mit dem ersten Schenkel (12) verbundenen Profilstabs (38) eingreifen kann.

5. Befestigungswinkel nach Anspruch 4, **dadurch gekennzeichnet, daß** die Zentriereinrichtung (28) von vier, in einem Rechteck angeordneten Zentrierfortsätzen (30) gebildet ist.

6. Befestigungswinkel nach einem der Ansprüche 1 bis 5, **dadurch gekennzeichnet, daß** der Befestigungswinkel (10) ein einteilig ausgebildetes Druckgußteil ist.

7. Anordnung mit zwei Profilstäben (34, 38) und einem Befestigungswinkel (10) entsprechend den Ansprüchen 1 bis 6, **dadurch gekennzeichnet, daß** der erste Schenkel (12) des Befestigungswinkels (10) an einer Längsseite des ersten Profilstabs (34) fixiert ist und daß der zweite Profilstab (38) mit seinen Stirnseiten am zweiten Schenkel (14) des Befestigungswinkels (10) angeordnet ist, so daß die Längsachsen der beiden Profilstäbe (34, 38) parallel zueinander verlaufen.

8. Anordnung nach Anspruch 7, **dadurch gekennzeichnet, daß** der zweite Profilstab (38) auf der dem ersten Schenkel (12) zugewandten als auch auf der davon abgewandten Seite des zweiten Schenkels (14) anordenbar ist und daß die beiden Profilstäbe (34, 38) zueinander einen nahezu beliebig großen Verdrehwinkel miteinander einschließen.

9. Trennwand mit wenigstens einem Stützprofil (34) und wenigstens einer an dem Stützprofil (34) mittels wenigstens eines Befestigungswinkels (10) nach einem der Ansprüche 1 bis 8 angeordneten Rahmenkonstruktion (36).

## Claims

1. Fastening bracket (10) for connecting at least two profile bars (34, 38) which each have a central bore and, on at least one of their outer sides, a longitudinal groove (42), having a first leg (12) and a second leg (14) arranged at right angles to the first, the two legs each being provided with a cutout, by means of which the fastening bracket (10) can be anchored to the two profile bars (34, 38) by means of fastening elements (40), the cutout of the first leg (12) being a bore (18) and the cutout of the second leg (14) being a slot (20), and having a centring device (28), which is formed on the outer side of at least one of the legs (12, 14) and can engage in the longitudinal groove (42) of the associated profile bar (34, 38), **characterized in that** the two legs (12, 14) have at least one supporting wall (16), which has an outwardly rounded outer contour and by means of which the mutually facing inner sides of the legs (12, 14) are connected to one another at least in certain sections.

2. Fastening bracket according to Claim 1, **characterized in that** two spaced-apart supporting walls (16) are provided, the mutually remote side surfaces of which merge in a flush manner into the end surfaces of the fastening bracket (10).

3. Fastening bracket according to either of Claims 1 and 2, **characterized in that** the slot (20) of the second leg (14) is spaced apart from the first leg (12) by a distance (22) which is greater than the sum of the length of the supporting wall (16) extending in the direction of the second leg (14) and the length of the largest turning radius (R) of the profile bar (38) which is to be connected to the second leg (14).

4. Fastening bracket according to one of Claims 1 to 3, **characterized in that** the at least one centring device (28) is formed on the first leg (12) and can engage with play in the longitudinal groove (42) of the profile bar (34) connected to the first leg (12).

5. Fastening bracket according to Claim 4, **characterized in that** the centring device (28) is formed by four centring extensions (30) arranged in a rectangle.

6. Fastening bracket according to one of Claims 1 to 5, **characterized in that** the fastening bracket (10) is a single-piece diecasting.

7. Arrangement with two profile bars (34, 38) and a fastening bracket (10) according to Claims 1 to 6, **characterized in that** the first leg (12) of the fastening bracket (10) is fixed on a longitudinal side of the first profile bar (34), and **in that** the second profile bar (38) has its end sides arranged on the second leg (14) of the fastening bracket (10), with the result that the longitudinal axes of the two profile bars (34, 38) run parallel to one another.

8. Arrangement according to Claim 7, **characterized in that** the second profile bar (38) may be arranged on that side of the second leg (14) which is directed towards the first leg (12) as well as on that side of the second leg (14) which is directed away from the first leg (12), and **in that** the two profile bars (34, 38) enclose with one another an angle of rotation of more or less any desired magnitude.

9. Partition wall having at least one supporting profile (34) and at least one frame structure (36) which is arranged on the supporting profile (34) by means of at least one fastening bracket (10) according to one of Claims 1 to 6.

## Revendications

1. Cornière de fixation (10) pour relier au moins deux profils (34, 38) ayant chaque fois un perçage central et dont au moins l'un des côtés extérieurs comporte une rainure longitudinale (42), ayant une première branche (12) et une seconde branche (14) perpendiculaire à celle-ci, ces branches ayant chacune une cavité par laquelle, la cornière de fixation (10) est accrochée à l'aide d'éléments de fixation (40) aux deux profils (34, 38),
la cavité de la première branche (12) ayant un perçage (18) et la cavité de la seconde branche (14) un trou oblong (20) et une installation de centrage (28) réalisée sur le côté extérieur d'au moins l'une des branches (12, 14), cette installation pouvant pénétrer dans la rainure longitudinale (42) du profil associé (34, 38),
**caractérisée en ce que**
les deux branches (12, 14) comportent au moins une cloison d'appui (16) dont le contour extérieur est arrondi vers l'extérieur, cette cloison reliant les côtés intérieurs tournés l'un vers l'autre des branches (12, 14), au moins sur un segment.

2. Cornière de fixation selon la revendication 1,
**caractérisée par**
deux parois d'appui (16) écartées l'une de l'autre et dont les faces latérales opposées sont au niveau des faces frontales de la cornière de fixation (10).

3. Cornière de fixation selon l'une des revendications 1 ou 2,
**caractérisée en ce que**
le trou oblong (20) de la seconde branche (14) présente une distance (22) par rapport à la première branche (12) qui est supérieure à la somme des longueurs de la cloison d'appui (16) qui s'étend dans la direction de la seconde branche (14) et de la longueur du plus grand rayon de rotation (R) du profil (38) destiné à être relié à la seconde branche (14).

4. Cornière de fixation selon l'une quelconque des revendications 1 à 3,
**caractérisée en ce qu'**
au moins une installation de centrage (28) est réalisée sur la première branche (12) et peut prendre avec du jeu dans la rainure longitudinale (42) du profil (38) relié à la première branche (12).

5. Cornière de fixation selon la revendication 4,
**caractérisée en ce que**
l'installation de centrage (28) est formée par quatre prolongements de centrage (30) répartis suivant un rectangle.

6. Cornière de fixation selon l'une quelconque des revendications 1 à 5,
**caractérisée en ce que**
la cornière de fixation (10) est une pièce injectée sous pression, en une seule partie.

7. Disposition comportant deux profils (34, 38) et une cornière de fixation (10) selon l'une quelconque des revendications 1 à 6,
**caractérisée en ce que**
la première branche (12) de la cornière de fixation (10) est bloquée sur un grand côté du premier profil de fixation (34) et le second profil (38) est installé avec sa face frontale contre la seconde branche (14) de la cornière de fixation (10) pour que les axes longitudinaux des deux profils (34, 38) soient parallèles.

8. Disposition selon la revendication 7,
**caractérisée en ce que**
le second profil (38) peut être installé sur le côté de la seconde branche (14) tournée vers la première branche (12) ainsi que celui opposé à celle-ci et
les deux profits (34, 38) peuvent faire entre eux un angle de rotation quelconque.

9. Cloison comportant au moins un profil d'appui (34) et au moins une construction en forme de châssis (36) installée sur le profil d'appui (34) à l'aide d'au moins une cornière de fixation (10) selon l'une quelconque des revendications 1 à 8.
